# FASCICULE DE BREVET EUROPEEN

(11) **EP 0 991 556 B1**
(45) Date de publication et mention de la délivrance du brevet: **17.07.2002**
(21) Numéro de dépôt: 98933699.5
(22) Date de dépôt: 24.06.1998
(51) Int. Cl.: B60T 13/57, B60T 13/72

(54) **SERVOMOTEUR PNEUMATIQUE D'ASSISTANCE AU FREINAGE A CLAPET PERFECTIONNE**
PNEUMATISCHER BREMSKRAFTVERSTÄRKER MIT VERBESSERTEM VENTIL
BRAKE POWER ASSIST PNEUMATIC BOOSTER WITH IMPROVED VALVE

(30) Priorité: 27.06.1997 FR 9708120
(43) Date de publication de la demande: 12.04.2000
(73) Titulaire: BOSCH SISTEMAS DE FRENADO, S.L., 08080 Barcelona 6 (ES)
(72) Inventeur: SIMON BACARDIT, Juan, Bosch Systèmes de Freinage, F-93700 Drancy (FR)
(74) Mandataire: Hurwic, Aleksander Wiktor
(86) Numéro de dépôt international: FR9801327
(87) Numéro de publication internationale: WO9900284

(56) Documents cités:
- EP-A- 0 233 026
- DE-A- 4 141 353
- DE-A- 4 337 361

## Description

La présente invention concerne les servomoteurs pneumatiques, du type de ceux qui sont utilisés pour fournir une assistance au freinage des véhicules automobiles.

De tels servomoteurs sont bien connus dans la technique automobile et comportent de façon classique une enveloppe possédant un axe de symétrie, séparée de façon étanche par au moins une structure de paroi mobile en une chambre avant reliée en permanence à une source de basse pression, et une chambre arrière reliée sélectivement à la chambre avant ou à une source de haute pression par un moyen de valve à trois voies actionnée par une tige de commande solidaire d'un plongeur, soumise à l'action d'un ressort de rappel et susceptible de coulisser dans un alésage formé dans un piston pneumatique, solidaire de la paroi mobile et dont une partie tubulaire arrière est susceptible de coulisser de façon étanche dans une ouverture de la paroi arrière de l'enveloppe, la valve à trois voies comportant un élément de clapet disposé dans la partie arrière tubulaire de la paroi mobile et coopérant avec un premier siège de clapet formé sur le plongeur et avec un second siège de clapet formé sur le piston pneumatique, la position arrière de repos du plongeur étant définie par une butée formée à l'extrémité avant d'un manchon disposé dans la partie tubulaire arrière du piston pneumatique, le ressort de rappel de la tige de commande étant disposé entre le piston pneumatique et le plongeur.

De très nombreux documents illustrent ce type de servomoteurs, comme par exemple le document EP-A-0 233 026 ou le document DE-A-4 141 353. On a depuis longtemps cherché à améliorer les performances de ces servomoteurs, et en particulier à en diminuer l'effort d'attaque, le temps de réponse, de façon à obtenir un actionnement rapide des freins lors d'une sollicitation de la pédale de frein, et à en diminuer également le temps de retour, de façon à ce que le conducteur puisse doser précisément son action de freinage.

L'amélioration du temps de réponse peut classiquement être obtenue en augmentant la section de passage de l'air au niveau du premier siège annulaire de clapet, formé sur le plongeur, et généralement en augmentant son diamètre. Par contre, lorsqu'on désire obtenir une diminution le temps de retour du servomoteur, cela impose de réduire le diamètre du second siège annulaire de clapet, formé sur le piston pneumatique. Ces deux améliorations sont ainsi contradictoires, puisque, dans cette conception de servomoteur, les sièges de clapet sont sensiblement situés dans un même plan et que le diamètre du premier siège de clapet est limité, entre autres paramètres, par le diamètre du le second siège de clapet.

La présente invention se place dans ce contexte et a pour objet de proposer un servomoteur, du type rappelé ci-dessus, dans lequel on obtienne à la fois une réduction de l'effort d'attaque, des temps de réponse et de retour, par des moyens simples à mettre en oeuvre et fiables, et de plus en ne modifiant qu'un minimum de composants d'un servomoteur classique de façon à utiliser un maximum de pièces déjà en production et ainsi ne pas augmenter le coût du servomoteur. Un tel servomoteur doit de plus pouvoir être actionné automatiquement de façon simple pour répondre aux souhaits actuels des constructeurs d'automobiles.

Dans ce but, la présente invention prévoit que le plongeur comporte une partie arrière cylindrique susceptible de coulisser sur l'extrémité avant du manchon disposé dans la partie tubulaire arrière du piston pneumatique, et que le clapet soit formé dans une pièce souple en forme de canal circulaire symétrique par rapport à l'axe de symétrie du servomoteur, dont l'ouverture est dirigée vers l'arrière, et formant avec une pièce de maintien une chambre de compensation en communication permanente avec la chambre arrière du servomoteur.

On pourra alors prévoir qu'un ressort de compression soit disposé dans la chambre de compensation pour solliciter le clapet vers l'avant en direction des premier et deuxième sièges de clapet.

De façon avantageuse, le plongeur peut coulisser de façon étanche dans l'alésage du piston pneumatique et comporter un passage permettant à la haute pression de s'installer en permanence sur la face avant du plongeur.

Selon un mode de réalisation, le manchon est solidaire de la partie tubulaire arrière du piston pneumatique, par encliquetage ou en étant retenu par un circlips.

Selon un autre mode de réalisation, le manchon est susceptible de coulisser axialement dans la partie tubulaire arrière du piston pneumatique, entre deux butées ou épaulements de la partie tubulaire arrière.

Selon ce dernier mode de réalisation, on peut prévoir que le manchon soit solidaire de la pièce de maintien et d'au moins une des extrémités arrière de la pièce souple portant le clapet.

On pourra également prévoir que le manchon comporte une extrémité arrière susceptible de coulisser dans un alésage formé par des pièces polaires dans lesquelles peut circuler un flux magnétique engendré par un bobinage électrique.

La présente invention est applicable à des servomoteurs dans lesquels la force d'assistance engendrée par la différence de pression s'exerçant sur les deux faces de la paroi mobile est transmise à une tige de poussée par une face avant annulaire du piston agissant sur un disque de réaction sur la partie centrale duquel est en appui la face avant du plongeur.

Elle est également applicable à des servomoteurs dans lesquels la force d'assistance engendrée par la différence de pression s'exerçant sur les deux faces de la paroi mobile est transmise par la cloison mobile au piston d'un maître-cylindre dans lequel la pression hydraulique s'exerce sur un piston de réaction susceptible de venir en contact avec le plongeur.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue de côté, en coupe longitudinale, d'un servomoteur pneumatique d'assistance au freinage, réalisé conformément à la présente invention;
- La Figure 2 représente une vue de côté, en coupe longitudinale, de la partie centrale arrière du servomoteur pneumatique de la Figure 1;
- La Figure 3 représente une vue de côté, en coupe longitudinale, de la partie centrale arrière d'un servomoteur pneumatique à réaction hydraulique réalisé conformément à la présente invention;
- La Figure 4 représente une vue semblable à celle de la Figure 2, montrant la partie centrale arrière d'un servomoteur pneumatique réalisé selon une variante de la présente invention;
- La Figure 5 représente une vue semblable à celle de la Figure 3, montrant la partie centrale arrière d'un servomoteur pneumatique à réaction hydraulique réalisé selon la variante de la Figure 4, et
- La Figure 6 représente une vue de côté, en coupe longitudinale, de la partie centrale arrière d'un servomoteur pneumatique réalisé selon une deuxième variante de la présente invention.

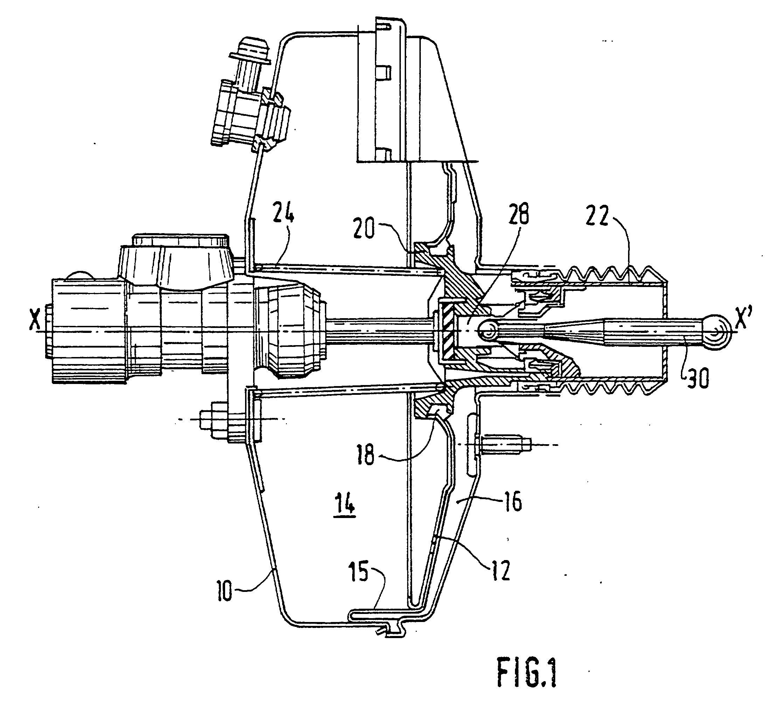

La Figure 1 représente une vue en coupe d'un servomoteur pneumatique d'assistance au freinage prévu pour être placé de façon conventionnelle entre la pédale de frein d'un véhicule et le maître-cylindre commandant la pression dans le circuit de freinage hydraulique de ce véhicule.

Par convention, on appelle "avant" du servomoteur la partie de ce dernier tournée vers le maître-cylindre et "arrière" du servomoteur la partie tournée vers la pédale de frein. Sur les Figures, l'avant est ainsi à gauche et l'arrière à droite.

Le servomoteur représenté sur la Figure 1 comprend une enveloppe extérieure 10 en forme de coquille, présentant une symétrie de révolution autour d'un axe X-X'.

Une structure de paroi mobile 12 délimite à l'intérieur de l'enveloppe 10 une chambre avant 14 et une chambre arrière 16. La paroi mobile 12 est associée à une membrane déroulante souple 15 en élastomère dont le bord périphérique intérieur est reçu de façon étanche grâce à un bourrelet 18 dans un piston creux d'assistance 20, solidaire de la paroi mobile 12 et disposé selon l'axe X-X' du servomoteur, et dont le bord périphérique extérieur est fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant de l'enveloppe 10 maintient normalement le piston 20 dans la position arrière de repos illustrée sur les Figures, dans laquelle la chambre arrière 16 présente son volume minimal et la chambre avant 14 son volume maximal.

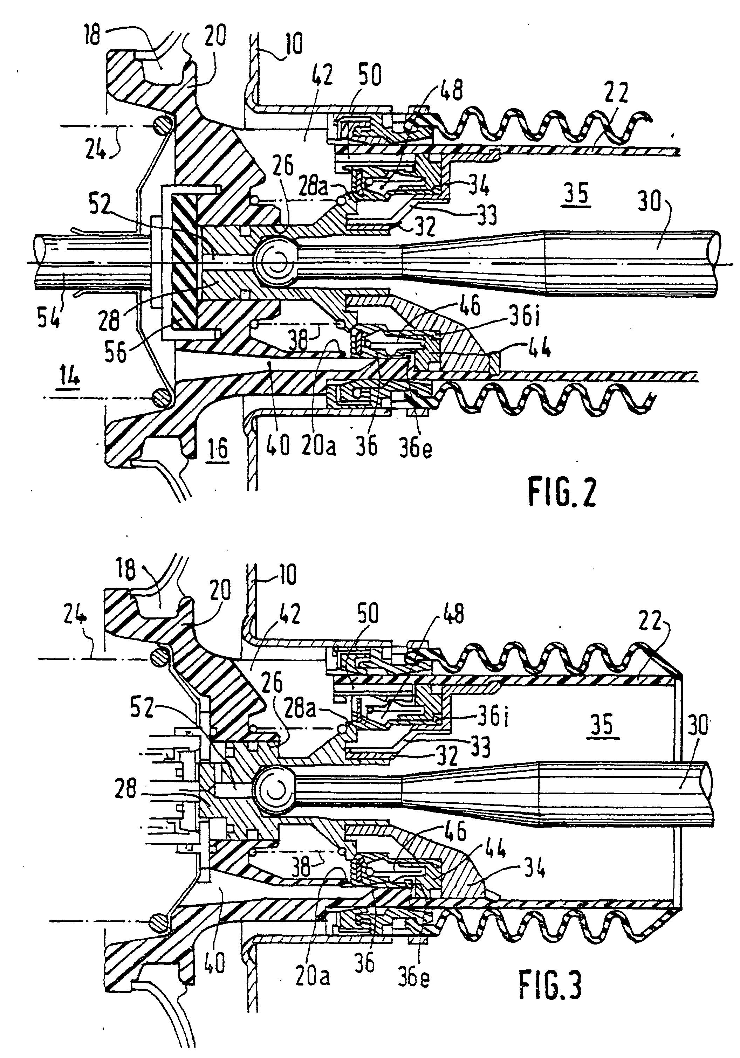

Comme on le voit mieux sur les Figures 2 à 6, dans la partie centrale de la paroi mobile située en avant de la partie tubulaire arrière 22, le piston pneumatique 20 présente un alésage 26 dans lequel est reçue en coulissement l'extrémité avant d'un plongeur 28. L'extrémité avant d'une tige de commande 30 du servomoteur, disposée également selon l'axe X-X', est montée rotulante dans un alésage borgne du plongeur 28.

L'extrémité arrière du plongeur 28 est cylindrique et elle est susceptible de coulisser sur l'extrémité avant 32 d'un manchon 34 disposé dans la partie tubulaire arrière 22. Dans l'exemple de réalisation des Figures 2 et 3, le manchon 34 est solidaire de la partie tubulaire arrière 22, par exemple par encliquetage, comme on l'a représenté sur la moitié supérieure de la Figure 2, ou à l'aide d'un circlips, comme on l'a représenté sur la moitié inférieure de la Figure 2. Des ouvertures 33 sont de plus pratiquées dans le manchon 34.

L'extrémité arrière (Figure 1) de la tige de commande 30, qui fait saillie à l'extérieur de la partie tubulaire 22, est commandée directement par la pédale de frein du véhicule (non représentée).

Le plongeur 28 commande le fonctionnement de moyens d'assistance qui comprennent une valve à trois voies comportant un clapet annulaire 36 et deux sièges de clapet 20a et 28a formés respectivement à l'arrière de la partie centrale du piston 20 et à l'arrière du plongeur 28, le siège 20a entourant le siège 28a.

Un ressort de compression 38 est disposé entre un épaulement du piston pneumatique 20 et un épaulement du plongeur 28 de façon à solliciter ce plongeur 28 vers l'arrière, dans la position de repos représentée sur les Figures où le plongeur 28 est en butée sur l'extrémité avant 32 du manchon 34.

Dans cette position de repos, le premier siège de clapet 28a est en appui sur le clapet annulaire 36, et maintient ce dernier à faible distance du deuxième siège de clapet 20a, de sorte que les chambres avant 14 et arrière 16 communiquent entre elles par l'intermédiaire d'un passage sensiblement axial 40 et d'un passage sensiblement radial 42 ménagés dans le piston pneumatique 20.

Le clapet 36 constitue l'extrémité annulaire avant, située dans un plan sensiblement perpendiculaire à l'axe X-X', d'une pièce souple, par exemple en élastomère, en forme de gouttière ou de canal circulaire, symétrique par rapport à l'axe X-X', et dont l'ouverture est dirigée vers l'arrière. Les extrémités arrière 36e et 36i des parois latérales s'étendant dans la direction de l'axe X-X' sont retenues par une pièce de maintien 44, en coopération par exemple avec la paroi avant du manchon 34. Un ressort de compression 46 est interposé entre la paroi avant de la pièce de maintien 44 et la face arrière du clapet 36 pour solliciter ce dernier vers l'avant, en direction des sièges de clapet 20a et 28a.

La pièce souple portant le clapet 36 et la pièce de maintien 44 délimitent un volume 48, contenant le ressort 46, et en communication permanente avec la chambre arrière 16 du servomoteur par l'intermédiaire d'au moins un passage axial 50 ménagé dans le piston pneumatique 20.

Lorsque le servomoteur est dans sa position de repos illustrée sur les Figures, la position arrière du plongeur 28, en butée sur l'extrémité avant 32 du manchon 34, est telle que le siège de clapet 28a est en appui sur la face avant annulaire du clapet 36 et maintient ce dernier éloigné du siège 20a, de telle sorte que les chambres avant 14 et 16 du servomoteur communiquent par l'intermédiaire du passage axial 40, du passage de valve 20a-36, et le passage radial 42.

En particulier, le volume 48, encore appelé volume de compensation, est soumis à la même pression que celle qui règne dans la chambre arrière du servomoteur, alors que la pression atmosphérique règne à l'extérieur de ce volume, en arrière du siège de clapet 28a.

On comprend donc que l'on pourra donner à la pièce de maintien 44, et au manchon 34, une forme telle que le diamètre de l'extrémité arrière 36i soit égal au diamètre du siège de clapet 28a. De la sorte, la différence des pressions s'exerçant sur le voile de liaison entre le clapet 36 et l'extrémité 36i engendre une force s'exerçant perpendiculairement à l'axe X-X'. On pourra ainsi réduire la précontrainte au repos du ressort 38, et réduire en même temps l'effort d'attaque qu'il est nécessaire de fournir pour actionner le servomoteur.

On pourra avantageusement réduire encore cet effort d'attaque en prévoyant, comme on l'a représenté sur les Figures 2 et 3, que le plongeur 28 coulisse de façon étanche dans l'alésage 26 du piston pneumatique 20, et qu'il comporte un passage 52 permettant à la pression atmosphérique de s'installer en permanence sur la face avant du plongeur 28.

De la sorte, la différence des pressions s'exerçant au repos sur le plongeur 28 ne s'exerce que sur la section de celui-ci qui est égale à la section du siège de clapet 28a, diminuée de la section de l'alésage 26. On comprend donc ainsi qu'on pourra rendre cette différence de sections aussi petite qu'on le désire, et qu'on pourra ainsi réduire encore la pré-contrainte au repos du ressort 38, et réduire en même temps l'effort d'attaque.

Lors d'une action de freinage, le conducteur du véhicule appuie sur la pédale de frein pour faire avancer la tige de commande 30. Le plongeur 28 coulisse dans l'alésage 26 et sur la partie avant 32 du manchon 34, de sorte que la face avant annulaire du clapet 36 vient au contact du siège 20a, isolant ainsi les chambres avant 14 et arrière 16 l'une de l'autre.

Le plongeur 28 continuant d'avancer dans le piston pneumatique 20, le siège de clapet 28a s'éloigne de la face avant annulaire du clapet 36, ce qui met l'espace annulaire 35 en communication avec la chambre arrière 16 par l'intermédiaire des ouvertures 33 pratiquées dans le manchon 34.

Grâce à l'invention, et en particulier à la conception du clapet 36, comme on le voit sur les Figures, on pourra donner au siège de clapet 28a un diamètre relativement important pour que le passage de valve 28a-36 ait une section agrandie, permettant ainsi à l'air dans l'espace annulaire 35 de pénétrer plus facilement dans la chambre arrière 16 du servomoteur, et permettant donc que le temps de réponse du servomoteur soit minimal.

De plus, la disposition particulière du ressort de rappel 38 présente l'avantage supplémentaire que ce ressort se trouve ainsi en dehors du trajet de l'air en mouvement. et ne présente plus d'obstacle à ce mouvement, comme c'est le cas des servomoteurs de l'art antérieur où le ressort de rappel est classiquement disposé autour de la tige de commande 30, en prenant appui sur un épaulement de la partie tubulaire arrière 22.

La pression peut ainsi augmenter rapidement dans la chambre arrière 16 du servomoteur et créer une différence de pressions sur la paroi mobile 12, engendrant une force d'assistance qui tend à la déplacer vers l'avant.

Dans l'exemple de réalisation de la Figure 2, cette force est transmise à une tige de poussée 54 par une face avant annulaire du piston 20 agissant sur un disque de réaction 56, sur la partie centrale duquel est en appui la face avant du plongeur 28.

Dans l'exemple de réalisation de la Figure 3, cette force est transmise par la cloison mobile 12 directement au piston du maître-cylindre, dans lequel la pression du fluide hydraulique augmente et agit sur un piston de réaction qui se meut vers l'arrière et vient au contact du plongeur 28, selon la technologie bien connue des servomoteurs à réaction hydraulique.

Lorsque le conducteur du véhicule, désire réduire son action de freinage ou y mettre fin, il relâche son effort sur la tige de commande 30, et le ressort de rappel 38 agissant sur le plongeur 28 ramène ce dernier vers l'arrière en entraînant avec lui la tige de commande 30.

Le siège de clapet 28a vient dans un premier temps au contact du clapet 36, interrompant ainsi la communication entre l'espace annulaire 35 et la chambre arrière 16. Puis, le siège de clapet 28a soulève vers l'arrière le clapet 36 du siège de clapet 20a, permettant ainsi de nouveau la communication entre les chambres avant 14 et arrière 16 du servomoteur, avec un temps de retour réduit.

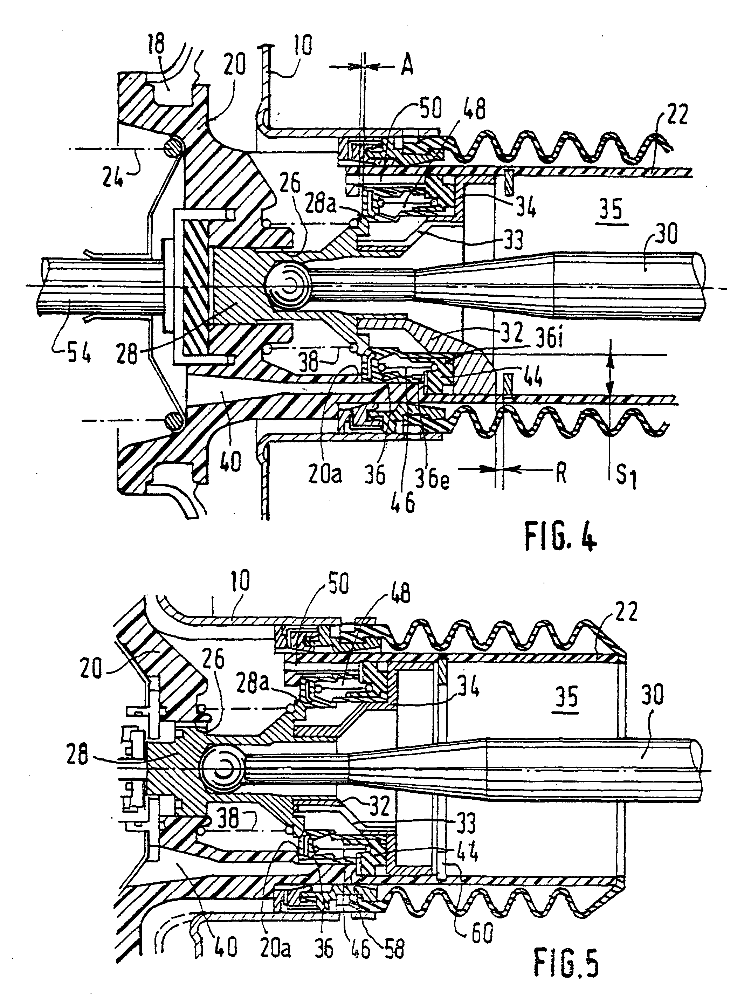

On pourra avantageusement réduire encore ce temps de retour avec la variante de réalisation représentée sur les Figures 4 et 5, relatives respectivement à des servomoteurs à disque de réaction et à réaction hydraulique.

Selon cette variante, le manchon 34 est monté dans la partie tubulaire arrière 22 de façon à pouvoir coulisser axialement dans cette partie 22 sur une distance R, entre deux butées ou épaulements 58 et 60 (Figure 5) de la partie arrière tubulaire 22. Le manchon 34 est solidaire de la pièce de maintien 44 et de l'extrémité 36i de la pièce souple portant le clapet 36, l'autre extrémité 36e étant solidaire de la partie arrière tubulaire 22 par exemple au moyen d'un insert métallique. Les autres composants sont identiques à ceux que l'on a décrits précédemment et ne seront donc pas explicités plus en détail.

Dans la position de repos représentée sur les Figures 4 et 5, le manchon 34 et la pièce de maintien 44 sont en butée vers l'avant sur l'épaulement 58. En effet, la dépression règne alors dans les chambres avant 14 et arrière 16 du servomoteur, ainsi que dans la chambre de compensation 48. La section S₁ du manchon 34 est alors soumise à une force F₁ vers l'avant engendrée par la différence des pressions ΔP s'exerçant sur les deux côtés de cette section S₁, la force F₁ étant égale au produit de la section S₁ par la différence de pressions ΔP, et inférieure à la force antagoniste exercée par le ressort 38, dont la précontrainte au repos est relativement faible comme on l'a vu plus haut.

Lors d'une action de freinage, le fonctionnement du servomoteur selon cette variante de réalisation est identique à celui qui a été décrit en relation avec les Figures 2 et 3. On obtient donc encore les mêmes caractéristiques que celles qui ont été décrites en relation avec ces servomoteurs, à savoir un temps de réponse très faible, et une course morte initiale réduite.

Lorsque le conducteur du véhicule désire réduire son action de freinage ou y mettre fin, il relâche son effort sur la tige de commande 30, et le ressort de rappel 38 agissant sur le plongeur 28 ramène ce dernier vers l'arrière en entraînant avec lui la tige de commande 30.

La pression qui règne alors dans la chambre de compensation 48 est égale à la pression régnant dans la chambre arrière du servomoteur, qui est alors comprise entre la dépression régnant dans la chambre avant 14 du servomoteur et la pression atmosphérique régnant dans l'espace annulaire 35. Il s'ensuit que la force F₂ s'exerçant sur la section S₁ du manchon 34 est inférieure à la force F₁ qui s'exerçait lorsque le servomoteur était au repos, cette force F₂ étant alors inférieure à la force exercée par le ressort de rappel 38.

Il en résulte donc que lorsque le siège de clapet 28a vient au contact du clapet 36, il soulève vers l'arrière le clapet 36 du siège de clapet 20a, et il entraîne également le manchon 34 et la pièce de maintien 44 sur la distance R. Le clapet 36 s'éloigne donc du siège de clapet 20a de la distance A, existant normalement en position de repos (Figure 4), augmentée de la distance R, dont on peut choisir librement la valeur. On obtient donc bien une section de passage notablement agrandie pour l'air en mouvement de la chambre arrière 16 vers la chambre avant 14, et par conséquent un temps de retour extrêmement réduit.

On voit donc bien qu'on a réalisé un servomoteur dans lequel on peut influer sur le temps de réponse et sur le temps de retour indépendamment l'un de l'autre, et en particulier pour les améliorer tous deux simultanément. Une telle amélioration simultanée est obtenue par des moyens simples à mettre en oeuvre, fiables et peu onéreux. De plus, les autres composants standard du servomoteur, tels que l'enveloppe extérieure et la paroi mobile solidaire du piston, peuvent être utilisés tels quels pour mettre en oeuvre la présente invention, ce qui contribue encore à en diminuer le coût.

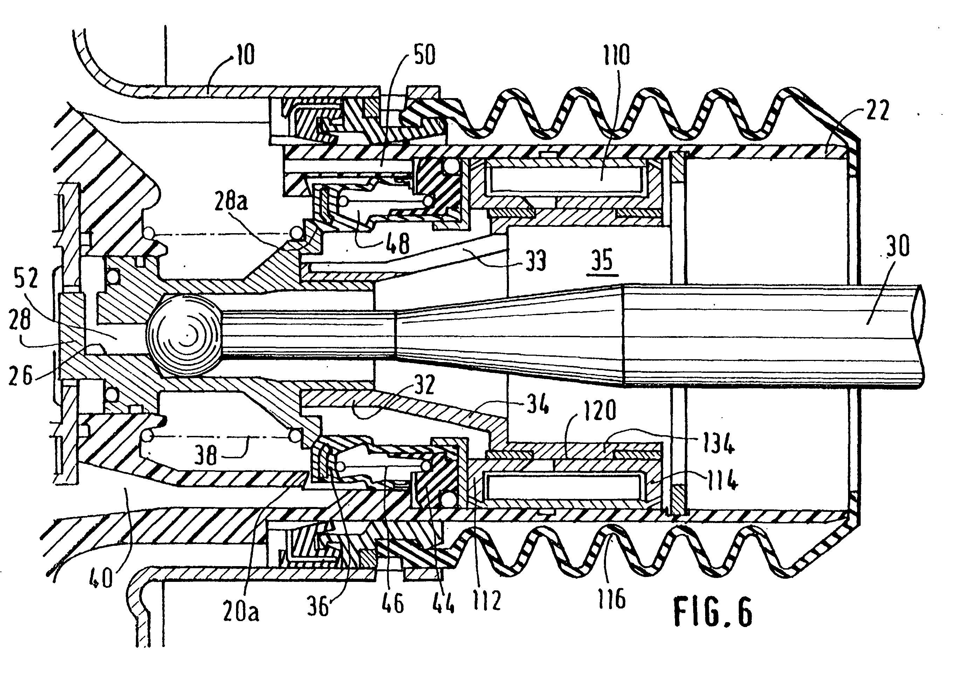

On a représenté sur la Figure 6 une autre variante de réalisation de la présente invention, qui rend possible l'obtention d'une fonction supplémentaire telle qu'un freinage automatique, c'est à dire sans intervention du conducteur du véhicule. De telles actions de freinage automatique peuvent être déclenchées par un ou plusieurs détecteurs de paramètres de fonctionnement ou d'attitude du véhicule par exemple pour empêcher les roues de patiner lors d'une accélération du véhicule, pour aider le conducteur du véhicule à démarrer dans une côte, ou sous la commande d'un dispositif de type radar anti-collision.

Dans ce but, le servomoteur représenté sur la Figure 6 est équipé d'un électroaimant comportant un bobinage électrique 110 susceptible de faire circuler un flux magnétique dans deux pièces polaires 112 et 114, une carcasse cylindrique en matériau magnétique 116 entourant le bobinage 110 et étant fixée dans la partie tubulaire arrière 22.

Les pièces polaires 112 et 114 définissent un alésage interne commun 120, dans lequel peut coulisser un noyau magnétique 134 constituant l'extrémité arrière cylindrique 134 du manchon 34, qui est alors réalisée en un matériau magnétique, par exemple en acier doux ou très doux, et qui est soumis au flux magnétique circulant dans les pièces polaires 112 et 114 et dans la carcasse 116 de façon à former un circuit magnétique pratiquement fermé.

La pièce polaire 112 est conformée de façon à ce que l'électroaimant ait un fonctionnement du type proportionnel. De façon plus précise, on sait que les bobinages de ce type présente la caractéristique essentielle de pouvoir fournir un effort sensiblement constant pour un courant déterminé dans une plage de déplacement appréciable du noyau magnétique 134 de l'ordre de plusieurs millimètres.

Un électroaimant de ce type présente alors l'avantage de pouvoir être commandé en faisant simplement varier le courant circulant dans le bobinage, par exemple par un microprocesseur assurant un découpage d'un courant continu à une fréquence variable, ou à une fréquence fixe et avec un rapport cyclique variable. Les autres composants du servomoteur sont identiques à ceux qui ont déjà été décrits plus haut en relation avec les Figures 2 et 3.

Au repos, c'est à dire en l'absence de courant électrique circulant dans le bobinage 110, les différents éléments composant le servomoteur occupent la position représentée sur la Figure 6. Le conducteur du véhicule peut alors effectuer des actions de freinage lorsqu'il le désire, le servomoteur fonctionnant alors comme on l'a décrit plus haut.

Lorsqu'un calculateur détecte la nécessité d'effectuer un freinage automatique, il commande alors l'augmentation du courant dans le bobinage 110. Ce courant engendre, par l'intermédiaire des pièces polaires 112 et 114, une force sur le noyau magnétique 134 et sur le manchon 34 qui se déplace à l'encontre de l'action du ressort 38.

Grâce à la constitution particulière du servomoteur selon la présente invention, en particulier du clapet soumis à l'action de la chambre de compensation 48 et du plongeur 28 n'étant soumis à une différence de pressions que sur une faible section, on a vu plus haut que la précontrainte au repos du ressort 38 peut être très faible. Il en résulte que l'effort que doit fournir l'électroaimant peut être lui aussi très faible, et donc que l'électroaimant peut être de dimensions réduites.

Le manchon 34 va donc adopter permanence une position telle que la résultante des forces antagonistes exercées sur lui par le ressort 38 et par le bobinage 110 soit nulle. On comprend ainsi qu'en modulant de façon appropriée l'intensité du courant circulant dans le bobinage 110, le noyau magnétique 134 et le manchon 34 vont commander le fonctionnement du servomoteur en réponse aux signaux fournis par les différents capteurs équipant le véhicule de la même façon que le ferait le conducteur du véhicule.

Bien entendu, l'invention n'est pas limitée aux modes de réalisation qui ont été décrits, mais elle est susceptible au contraire de recevoir de nombreuses modifications qui apparaîtront à l'homme du métier. C'est ainsi que l'invention est bien entendu applicable de la même façon à des servomoteurs de type tandem ou à chambres additionnelles.

## Revendications

1. Servomoteur pneumatique d'assistance au freinage, comportant une enveloppe (10) possédant un axe de symétrie (X-X'), séparée de façon étanche par au moins une structure de paroi mobile (12) en une chambre avant (14) reliée en permanence à une source de basse pression, et une chambre arrière (16) reliée sélectivement à la chambre avant (14) ou à une source de haute pression par un moyen de valve à trois voies (36) actionnée par une tige de commande (30) solidaire d'un plongeur (28), soumise à l'action d'un ressort de rappel (38) et susceptible de coulisser dans un alésage (26) formé dans un piston pneumatique (20), solidaire de la paroi mobile (12) et dont une partie tubulaire arrière (22) est susceptible de coulisser de façon étanche dans une ouverture de la paroi arrière de l'enveloppe (10), la valve à trois voies (36) comportant un élément de clapet (36) disposé dans la partie arrière tubulaire (22) du piston pneumatique (20) et coopérant avec un premier siège de clapet (28a) formé sur le plongeur (28) et avec un second siège de clapet (20a) formé sur le piston pneumatique (20), la position arrière de repos du plongeur (28) étant définie par une butée (32) formée à l'extrémité avant d'un manchon (34) disposé dans la partie tubulaire arrière (22) du piston pneumatique (20), le ressort de rappel (38) de la tige de commande (30) étant disposé entre le piston pneumatique (20) et le plongeur (28) **caractérisé en ce que** le plongeur (28) comporte une partie arrière cylindrique susceptible de coulisser sur l'extrémité avant (32) du manchon (34) disposé dans la partie tubulaire arrière (22) du piston pneumatique (20), et **en ce que** le clapet (36) est formé dans une pièce souple en forme de canal circulaire symétrique par rapport à l'axe (X-X') de symétrie du servomoteur, dont l'ouverture est dirigée vers l'arrière, et formant avec une pièce de maintien (44) une chambre de compensation (48) en communication permanente avec la chambre arrière (16) du servomoteur.

2. Servomoteur pneumatique selon la revendication 1, **caractérisé en ce qu'**un ressort de compression (46) est disposé dans la chambre de compensation (48) pour solliciter le clapet (36) vers l'avant en direction des premier (28a) et deuxième (20a) sièges de clapet.

3. Servomoteur pneumatique selon la revendication 1, **caractérisé en ce que** le plongeur (28) coulisse de façon étanche dans l'alésage (26) du piston pneumatique (20) et comporte un passage (52) permettant à la haute pression de s'installer en permanence sur la face avant du plongeur (28).

4. Servomoteur pneumatique selon la revendication 1, **caractérisé en ce que** le manchon (34) est solidaire de la partie tubulaire arrière (22) du piston pneumatique (20), par encliquetage ou en étant retenu par un circlips.

5. Servomoteur pneumatique selon la revendication 1, **caractérisé en ce que** le manchon (34) est susceptible de coulisser axialement dans la partie tubulaire arrière (22) du piston pneumatique (20), entre deux butées ou épaulements (58, 60) de la partie tubulaire arrière (22).

6. Servomoteur pneumatique selon les revendications 1 et 5, **caractérisé en ce que** le manchon (34) est solidaire de la pièce de maintien (44) et d'au moins une des extrémités arrière (36i, 36e) de la pièce souple portant le clapet (36).

7. Servomoteur pneumatique selon la revendication 1, **caractérisé en ce que** le manchon (34) comporte une extrémité arrière (134) susceptible de coulisser dans un alésage (120) formé par des pièces polaires (112, 114) dans lesquelles peut circuler un flux magnétique engendré par un bobinage électrique (110).

8. Servomoteur pneumatique selon l'une quelconque des revendications précédentes, **caractérisé en ce que** la force d'assistance engendrée par la différence de pression s'exerçant sur les deux faces de la paroi mobile (12) est transmise à une tige de poussée (54) par une face avant annulaire du piston (20) agissant sur un disque de réaction (56) sur la partie centrale duquel est en appui la face avant du plongeur (28).

9. Servomoteur pneumatique selon l'une quelconque des revendications 1 à 7, **caractérisé en ce que** la force d'assistance engendrée par la différence de pression s'exerçant sur les deux faces de la paroi mobile (12) est transmise par la cloison mobile (12) au piston d'un maître-cylindre dans lequel la pression hydraulique s'exerce sur un piston de réaction susceptible de venir en contact avec le plongeur (28).

## Patentansprüche

1. Pneumatischer Bremsunterstützungs-Servomotor, mit einem Gehäuse (10), das eine Symmetrieachse (X-X') aufweist und in dichter Weise durch eine bewegliche Wandstruktur (12) in eine permanent mit einer Unterdruckquelle verbundene vordere Kammer (14) und eine hintere Kammer (16) unterteilt ist, die selektiv mit der vorderen Kammer (14) oder einer Hochdruckquelle durch ein Dreiwegeventil (36) verbunden werden kann, das von einer Steuerstange (30) betätigt wird, die fest mit einem Tauchkolben (28) verbunden ist, welcher der Wirkung einer Rückstellfeder (38) ausgesetzt ist und in einer Bohrung (26) gleiten kann, die in einem Pneumatikkolben (20) gebildet ist, der fest mit der beweglichen Wand (12) verbunden ist und von dem ein rohrförmiger hinterer Teil (22) in dichter Weise in einer Öffnung der hinteren Wand des Gehäuses (10) gleiten kann, wobei das Dreiwegeventil (36) ein Ventilelement (36) aufweist, das in dem rohrförmigen hinteren Teil (22) des Pneumatikkolbens (20) angeordnet ist und mit einem ersten Ventilsitz (28a), der am Tauchkolben (28) ausgebildet ist, und mit einem zweiten Ventilsitz (20a) zusammenwirkt, der am Pneumatikkolben (20) gebildet ist, wobei die hintere Ruhestellung des Tauchkolbens (28) durch einen Anschlag (32) bestimmt ist, der am vorderen Ende einer Muffe (34) gebildet ist, der im rohrförmigen hinteren Teil (22) des Pneumatikkolbens (20) angeordnet ist, wobei die Rückstellfeder (38) der Steuerstange (30) zwischen dem Pneumatikkolben (20) und dem Tauchkolben (28) angeordnet ist, **dadurch gekennzeichnet, daß** der Tauchkolben (28) einen zylindrischen hinteren Abschnitt aufweist, der auf dem vorderen Ende (32) der Muffe (34) gleiten kann, die in dem rohrförmigen hinteren Teil (22) des Pneumatikkolbens (20) angeordnet ist, und daß das Ventilelement (36) in einem nachgiebigen Teil mit der Form eines zur Symmetrieachse (X-X') des Servomotors symmetrischen, kreisförmigen Kanals gebildet ist, dessen Öffnung nach hinten gerichtet ist und mit einem Halteteil (44) eine Ausgleichskammer (48) bildet, die permanent mit der hinteren Kammer (16) des Servomotors in Verbindung steht

2. Pneumatischer Servomotor nach Anspruch 1, **dadurch gekennzeichnet, daß** in der Ausgleichskammer (48) eine Druckfeder (46) angeordnet ist, um das Ventilelement (36) nach vorne in Richtung des ersten Ventilsitzes (28a) und des zweiten Ventilsitzes (20a) zu beaufschlagen.

3. Pneumatischer Servomotor nach Anspruch 1, **dadurch gekennzeichnet, daß** der Tauchkolben (28) in dichter Weise in der Bohrung (26) des Pneumatikkolbens (20) gleitet und einen Durchgang (52) aufweist, der es dem Hochdruck ermöglicht, permanent auf die vordere Seite des Tauchkolbens (28) einzuwirken.

4. Pneumatischer Servomotor nach Anspruch 1, **dadurch gekennzeichnet, daß** die Muffe (34) fest mit dem rohrförmigen hinteren Teil (22) des Pneumatikkolbens (20) durch Einrasten oder durch Halten mittels eines Clips verbunden ist.

5. Pneumatischer Servomotor nach Anspruch 1, **dadurch gekennzeichnet, daß** die Muffe (34) axial in dem rohrförmigen hinteren Teil (22) des Pneumatikkolbens (20) zwischen zwei Anschlägen oder Absätzen (58, 60) des rohrförmigen hinteren Teils (22) gleiten kann.

6. Pneumatischer Servomotor nach den Ansprüchen 1 und 5, **dadurch gekennzeichnet, daß** die Muffe (34) fest mit dem Halteteil (44) und wenigstens einem der hinteren Enden (36i, 36e) des nachgiebigen Teils verbunden ist, welches das Ventilelement (36) trägt.

7. Pneumatischer Servomotor nach Anspruch 1, **dadurch gekennzeichnet, daß** die Muffe (34) ein hinteres Ende (134) aufweist, das in einer Bohrung (120) gleiten kann, welche von Polschuhen (112, 114) gebildet ist, durch welche ein Magnetfluß fließen kann, der von einer elektrischen Spule (110) erzeugt wird.

8. Pneumatischer Servomotor nach einem der vorhergehenden Ansprüche, **dadurch gekennzeichnet, daß** die Unterstützungskraft, die von der Differenz der auf die beiden Seiten der beweglichen Wand (12) einwirkenden Drücken erzeugt wird, auf eine Schubstange (54) von einer vorderen ringförmigen Fläche des Kolbens (20) übertragen wird, die auf eine Reaktionsscheibe (56) in einem Mittelbereich einwirkt, an welchem die vordere Seite des Tauchkolbens (28) anliegt.

9. Pneumatischer Servomotor nach einem der Ansprüche 1 bis 7, **dadurch gekennzeichnet, daß** die Unterstützungskraft, die von der Differenz zwischen den auf die beiden Seiten der beweglichen Wand (12) einwirkenden Drücken erzeugt wird, von der beweglichen Wand (12) zum Kolben eines Hauptzylinders übertragen wird, in welchem der Hydraulikdruck auf einen Reaktionskolben einwirkt, der mit dem Tauchkolben (28) in Kontakt gelangen kann

## Claims

1. Pneumatic brake booster comprising a casing (10) having an axis of symmetry (X-X') and divided in leaktight fashion by at least one moving wall structure (12) into a front chamber (14) permanently connected to a low-pressure source and a rear chamber (16) selectively connected to the front chamber (14) or to a high-pressure source by a three-way valve means (36) actuated by an operating rod (30) secured to a plunger (28), subjected to the action of a return spring (38) and capable of sliding in a bore (26) formed in a pneumatic piston (20), secured to the moving wall (12) and a tubular rear part (22) of which can slide in leaktight fashion in an opening in the rear wall of the casing (10), the three-way valve (36) comprising a valve element (36) arranged in the tubular rear part (22) of the pneumatic piston (20) and interacting with a first valve seat (28a) formed on the plunger (28) and with a second valve seat (20a) formed on the pneumatic piston (20), the rear position of rest of the plunger (28) being defined by a stop (32) formed at the front end of a sleeve (34) arranged in the tubular rear part (22) of the pneumatic piston (20), the return spring (38) for the operating rod (30) being arranged between the pneumatic piston (20) and the plunger (28), **characterized in that** the plunger (28) comprises a cylindrical rear part capable of sliding over the front end (32) of the sleeve (34) arranged in the tubular rear part (22) of the pneumatic piston (20), and **in that** the valve element (36) is formed in a flexible component in the form of a circular duct that is symmetric with respect to the axis (X-X') of symmetry of the booster, the opening of which valve element points backward, and which with a holding piece (44) forms a compensation chamber (48) in permanent communication with the rear chamber (16) of the booster.

2. Pneumatic booster according to claim 1, **characterized in that** a compression spring (46) is arranged in the compensation chamber (48) in order to urge the valve element (36) forward toward the first (28a) and second (20a) valve seats.

3. Pneumatic booster according to claim 1, **characterized in that** the plunger (28) slides in leaktight fashion in the bore (26) of the pneumatic piston (20) and comprises a passage (52) allowing the high pressure to act permanently on the front face of the plunger (28).

4. Pneumatic booster according to claim 1, **characterized in that** the sleeve (34) is secured to the tubular rear part (22) of the pneumatic piston (20) by snap-fitting or by being held by a circlip.

5. Pneumatic booster according to claim 1, **characterized in that** the sleeve (34) is capable of sliding axially in the tubular rear part (22) of the pneumatic piston (20) between two stops or shoulders (58, 60) of the tubular rear part (22).

6. Pneumatic booster according to claims 1 and 5, **characterized in that** the sleeve (34) is secured to the holding piece (44) and to at least one of the rear ends (36i, 36e) of the flexible component carrying the valve element (36).

7. Pneumatic booster according to claim 1, **characterized in that** the sleeve (34) comprises a rear end (134) capable of sliding in a bore (120) formed by pole pieces (112, 114) in which a magnetic flux generated by an electric coil (110) can flow.

8. Pneumatic booster according to any one of the preceding claims, **characterized in that** the boost force generated by the difference in pressure exerted on the two faces of the moving wall (12) is transmitted to a push rod (54) via an annular front face of the piston (20) acting on a reaction disk (56) against the central part of which the front face of the plunger (28) bears.

9. Pneumatic booster according to any one of claims 1 to 7, **characterized in that** the boost force generated by the difference in pressure exerted on the two faces of the moving wall (12) is transmitted via the moving partition (12) to the piston of a master cylinder in which the hydraulic pressure is exerted on a reaction piston capable of coming into contact with the plunger (28).
